# EUROPEAN PATENT APPLICATION

(11) **EP 4 610 530 A1**
(43) Date of publication of application: **03.09.2025**
(21) Application number: 25159832.2
(22) Date of filing: 25.02.2025
(51) Int. Cl.: F16K 7/10, F16K 31/126, F16K 31/165, F16K 31/128, F16K 31/385

(54) **VALVE WITHOUT BODY**

(30) Priority: 28.02.2024 IT 202400004288
(71) Applicant: Lodolo, Alberto, 17015 Celle Ligure (SV) (IT)
(72) Inventor: Lodolo, Alberto, 17015 Celle Ligure (SV) (IT)
(74) Representative: Marietti, Andrea

(57) **Abstract**

Servo-actuated hydraulic valve adapted to be interposed between an upstream pipe (25) and a downstream pipe (26) of a conduit in which a fluid to be intercepted flows, said valve comprising an annular interposition element (1) and a plug (3) which is constrained to said annular interposition element (1), said plug (3) comprising an inner volume and being adapted to change its volume between a dilated configuration and a contracted configuration, said annular interposition element (1) being adapted to be interposed transversely and tightened between said upstream pipe (25) and said downstream pipe (26) of said conduit, so that said plug (3) is introduced at least partially into at least one of said upstream pipe (25) and said downstream pipe (26).

## Description

The present invention relates to a servo-actuated hydraulic valve according to the main claim. Servo-actuated hydraulic valves are typically used in pipelines in which water, or oil or any liquid, flows.

Servo-actuated hydraulic valves comprise a valve body with an inlet duct and an outlet duct, which meet along a sealing edge, above which the valve body has a main opening. An actuator is arranged at this opening and it may comprise an elastically deformable membrane made of rubbery material, the edge of which is clamped between the edge of the main opening and the edge of a lid, which is joined to the valve body by flanged connection. In this case the membrane acts both as actuator and plug. In other cases, the deformable membrane, which acts only as an actuator, is joined to a piston which acts as a plug.

To close or open the valve, the actuation chamber, which is partially delimited by the deformable membrane, is placed in connection with either the inlet duct or the outlet duct or with the outside through actuating ducts.

The fluid, which is brought from the inlet duct into the actuation chamber, exerts a pressure that, combined with the pressure exerted by an elastic element, causes the valve to close.

Said elastic element may be, for example, a spring or stiffening ribs or simply a preform that naturally causes the membrane to assume a closed configuration at rest.

On the other hand, when the actuation chamber is connected to the outlet duct or the outside, the membrane is deformed by the pressure of the fluid inside the duct which tends to flow into the valve, the actuation chamber empties and the valve opens. A two-way or three-way operating member allows the inlet duct to be connected to the actuation chamber and the actuation chamber to be connected to the outlet duct or the outside, by means of said actuating ducts.

The operating member may comprise, for example, a pilot or a solenoid valve.

The pilot is adapted to continuously adjust the opening of the valve, which can also be left partially open.

Usually, the solenoid electro-valve opens or closes the valve whereas an intermediate position of partial opening of the valve is not possible. Sometimes, inflatable plugs or stoppers are used to block the fluid in a pipeline in order to carry out maintenance work.

These plugs, which are not servo-actuated valves, however, are inflated by air or oil or water at high pressure, much greater than the pressure of the fluid flowing into the pipeline.

After maintenance operations are completed, these plugs are deflated and removed to allow the fluid to flow again.

The problems with currently existing servo-actuated valves are their weight, their bulk and cavitation phenomena due to the tortuous path the fluid is forced to follow when the valve is open.

For valves having sufficiently large nominal diameter, which therefore exceed a predetermined weight, regulations require two workers to lift and assemble them.

To be mounted at a point in a conduit, they must be interposed between the flanged or threaded ends of an upstream pipe and a downstream pipe and joined to them.

Another problem with current servo-actuated valves is the pressure drop when the valve is open.

It is desired, indeed, that the pressure drop when the valve is open should be minimal, but for many valves there is a significant pressure drop when the valve is open, due to the fluid being forced to follow a sinuous path within the valve.

Therefore, object of the present invention is to implement a servo-actuated hydraulic valve which can overcome the above-mentioned drawbacks, in particular an object is to implement a smaller and lighter servo-actuated valve.

Another object is to implement a servo-actuated hydraulic valve that is less expensive.

A further object is to implement a servo-actuated hydraulic valve that exhibits lower pressure drop and less cavitation when the valve is open.

Said objects are achieved by a servo-actuated hydraulic valve whose inventive features are highlighted by the claims.

The invention will be better understood by the following detailed description provided for illustration purposes only, thus without limitation, of two embodiments depicted in the accompanying drawings in which:
Fig. 1 shows a side view of the valve with the plug in dilated configuration;
Fig. 2 shows a perspective view of the servo-actuated hydraulic valve with the plug in dilated configuration;
Fig. 3 shows the valve in closed position, which is adapted to block the fluid, mounted between an upstream pipe and a downstream pipe;
Fig. 4 shows the valve in open position, mounted between an upstream pipe and a downstream pipe;
Fig. 5 shows a longitudinal section of a first embodiment of the valve according to the invention, adapted to connect a three-way operating member.
Fig. 6 shows a longitudinal section of a first variation of a second embodiment of the valve according to the invention, adapted to connect a two-way operating member.
Fig. 6A shows a different possible placement of the supplying duct in the first variation of the second embodiment.
Fig. 7 shows a longitudinal section of a second variation of the second embodiment of the valve according to the invention, adapted to connect a two-way operating member.
Fig. 7A shows a different possible placement of the supplying duct in the second variation of the second embodiment.

The first embodiment of the invention and its variations refer to a valve adapted to connect a three-way operating member, whereas the second embodiment and its variations refer to a valve adapted to connect a two-way operating member.

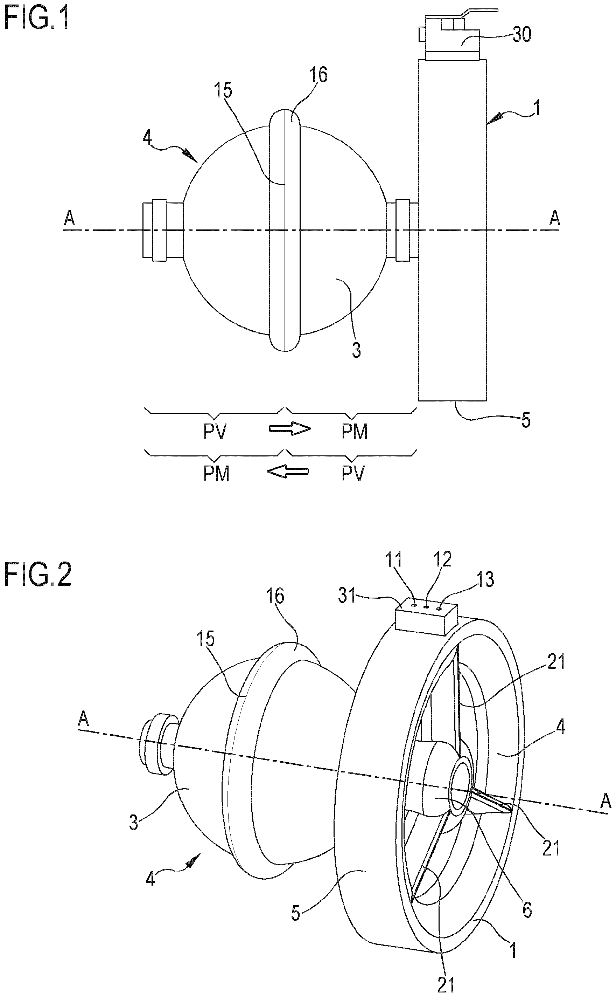

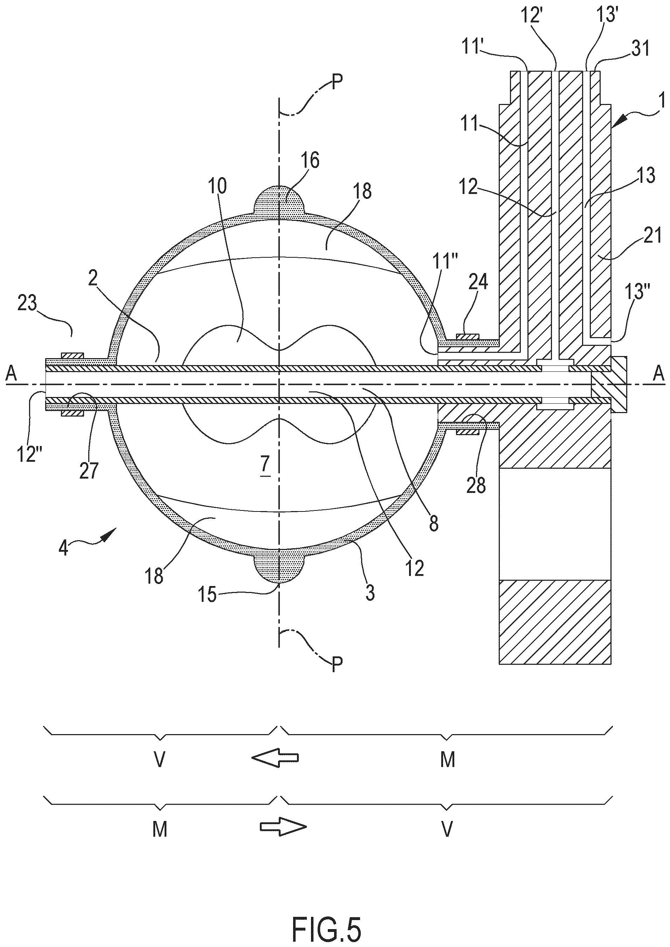

Figures 1, 3 and 4 refer to both embodiments, whereas Fig. 2 and Fig. 5 refer to valves adapted to connect a three-way operating member.

The servo-actuated hydraulic valve according to the invention is adapted to be interposed between an upstream pipe 25 and a downstream pipe 26 of a conduit in which a fluid to be intercepted flows in the longitudinal direction.

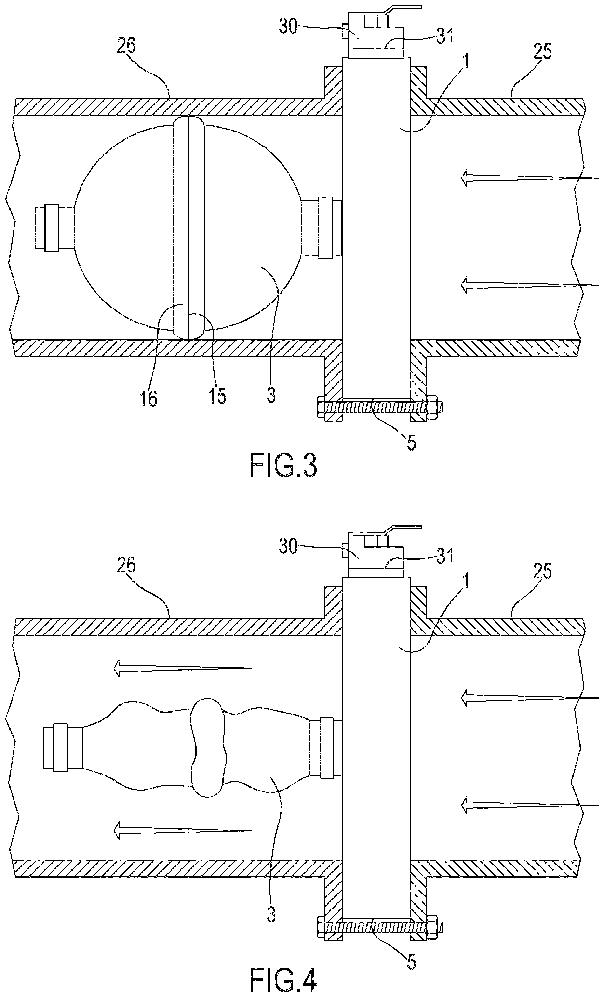

Referring to Figures 1 to 5, it can be seen that the valve according to the invention, in its first embodiment, comprises an annular interposition element 1 having an outer side surface 5. Furthermore, the valve comprises a plug 3 constrained to said annular interposition element 1, said plug 3 comprising an inner volume 7 and being adapted to change its volume between a dilated configuration and a contracted configuration, the dilated configuration corresponding to the closed valve (Fig. 3) and the contracted configuration corresponding to the open valve (Fig. 4).

The plug 3, when in dilated configuration, has substantially the shape of a sphere or ellipsoid or cylinder with two half spheres arranged to close the bases and is preferably made of plastic or rubbery, and thus flexible, material with an internal mesh to increase its strength.

The annular interposition element 1 is adapted to be interposed transversely and tightened, preferably by means of a flanged or threaded coupling, between the upstream pipe 25 and the downstream pipe 26 of said conduit, so that the outer side surface 5 remains accessible from the outside of the assembly comprising said upstream pipe 25, said downstream pipe 26 and said annular interposition element 1. The valve has an inner surface 4, which is adapted to come into contact with the fluid to be intercepted when the valve is operationally inserted into a conduit. This inner surface 4 comprises both the inner surface of the annular interposition element 1, including the spokes 21 and the central hub 6, and the portion of the surface of the supporting element 2, which is adapted to come into contact with the fluid to be intercepted, as well as the outer surface of the plug 3, but does not comprise the inner surface of the plug 3, which delimits the inner volume 7.

As shown in Figures 3 and 4, the valve according to the invention is adapted to be inserted into a duct in which the fluid, to be intercepted, flows, by interposing and tightening the annular interposition element 1 between an upstream pipe 25 and a downstream pipe 26 and by inserting the plug 3 into the downstream pipe or the upstream pipe.

When said plug 3 assumes a dilated configuration, it blocks the fluid flowing in the duct, whereas when it assumes a contracted configuration, it allows said fluid to flow.

Preferably, said plug 3 comprises on its outer surface an annular bulge 16, which, when the plug 3 assumes a dilated configuration to block the fluid flow, is adapted to press on the inner surface of the upstream or downstream pipe into which it is inserted, thus improving the sealing of the plug. When said plug 3 is in dilated configuration, it has a maximum cross section 15, which can be detected by the intersection with an ideal plane P perpendicular to the longitudinal direction.

This maximum cross section 15 divides an upstream portion PM from a downstream portion PV on the plug 3, and outside the plug 3, it separates an upstream side M from a downstream side V of the valve according to the invention.

The upstream portion PM and the downstream portion PV are two portions of the plug 3.

Thus, the plug 3 comprises an upstream portion PM and a downstream portion PV, the outer surface of the upstream portion PM of the plug 3 remaining in contact with the fluid to be intercepted when the valve is mounted, in operating position, on a conduit through which the fluid to be intercepted flows and the plug 3 is dilated, so as to close the valve. The upstream side M is everything upstream of the maximum cross section 15, inside to the assembly comprising the upstream pipe 25, the annular interposition element 1 and the downstream pipe 26, and outside the plug 3.

The downstream side V is everything downstream of the maximum cross section 15, inside the assembly comprising the upstream pipe 25, the annular interposition element 1 and the downstream pipe 26, and outside the plug 3.

The inner volume 7 of the plug 3 is neither part of the upstream side nor the downstream side.

On the other hand, the outer surface of the upstream portion PM of the plug 3 is part of the upstream side, and the outer surface of the downstream portion PV of the plug 3 is part of the downstream side.

It is clear that portions of the outer side surface 5 of the annular interposition element 1 may extend upstream or downstream, but the position of said annular interposition element 1 on the upstream side M or the downstream side V is determined by the position in which it is tightened between the upstream pipe 25 and the downstream pipe 26 with respect to the maximum cross section 15.

The maximum cross section 15 is substantially at the center of the contact area of the plug 3 with the pipe into which it is operationally inserted, when the plug is in dilated configuration.

The annular bulge 16, when present, is located at the maximum cross section 15 of the plug 3.

The valve also comprises a first actuating duct 11 having a first end 11' on the outer side surface 5 and a second end 11'' in the inner volume 7 of the plug 3, said first actuating duct 11 being able to connect the inner volume 7 of the plug 3 to the outside.

In the first embodiment, the valve according to the invention further comprises a second actuating duct 12 which has a first end 12' arranged on the outer side surface 5 of the annular interposition element 1 and a second end 12'' arranged on the inner surface 4 of the valve and either on the downstream side V, if the annular interposition element 1 is on the upstream side M, or on the upstream side M if the annular interposition element is on the downstream side V.

Thus, the second actuating duct 12 has the characteristic of crossing an ideal plane P that contains the maximum cross section 15. In addition, one of its two ends is located on the outer side surface 5 and the other end is arranged to be inside the assembly consisting of the upstream pipe 25, the valve and the downstream pipe 26, when the valve is operationally inserted into the conduit.

The first embodiment also comprises a third actuating duct 13, which does not cross the ideal plane P or the plug 3 from the upstream side to the downstream side.

It comprises a first end 13' arranged on the outer side surface 5 of the annular interposition element 1 and a second end 13'' arranged on the inner surface 4 of the valve and on the same downstream V or upstream M side on which the annular interposition element 1 is located.

Thus, in the first embodiment, the first ends 11', 12', 13' of the first, second and third actuating ducts 11, 12 and 13 are on the outer side surface 5 of the annular interposition element 1.

The outer side surface 5 can have any shape but it preferably comprises at least one flat portion 31 for connecting at least one flanged operating member, as in EP3194373 A1.

Such first ends 11', 12' and 13' are preferably located on said flat portion 31 of the outer side surface 5 to allow a three-way operating member 30 to be connected by flanged or threaded connection. In the described embodiment, the valve may comprise a three-way operating member 30 arranged on the outer side surface 5 of the annular interposition element 1, said operating member being connected to the first ends 11', 12', 13' of the first, second and third actuating ducts 11, 12 and 13.

The annular interposition element 1 also comprises a central hub 6 and one or more spokes 21 which are shaped to provide low fluid dynamic resistance and are adapted to connect said central hub 6 to the inner surface 4 of the annular interposition element 1.

The valve also comprises a supporting element 2 of the plug 3, usually a pipe or bar, connected to said central hub 6 and positioned in the longitudinal direction on the A - A axis of the conduit, when the annular interposition element 1 is interposed between the upstream pipe 25 and the downstream pipe 26 in the operating position.

The plug 3 has diametrically opposed first and second through-holes 27 and 28, so that the supporting element 2, introduced into said first and second through-holes 27 and 28, diametrically crosses the plug 3 from the upstream portion PM to the downstream portion PV, thus passing through the inner volume 7 and supporting the plug 3.

Obviously, at the first through-hole 27 and the second through-hole 28, the plug 3 comprises edges that allow sealed tightening by means of two tightening rings 23 and 24, around the supporting element 2, so that the inner volume 7 of the plug 3 is placed in communication with the outside only through the first actuating duct 11.

Obviously, it is also possible for the plug 3 to be shaped like a doughnut with a central hole and for the supporting element to pass through the central hole.

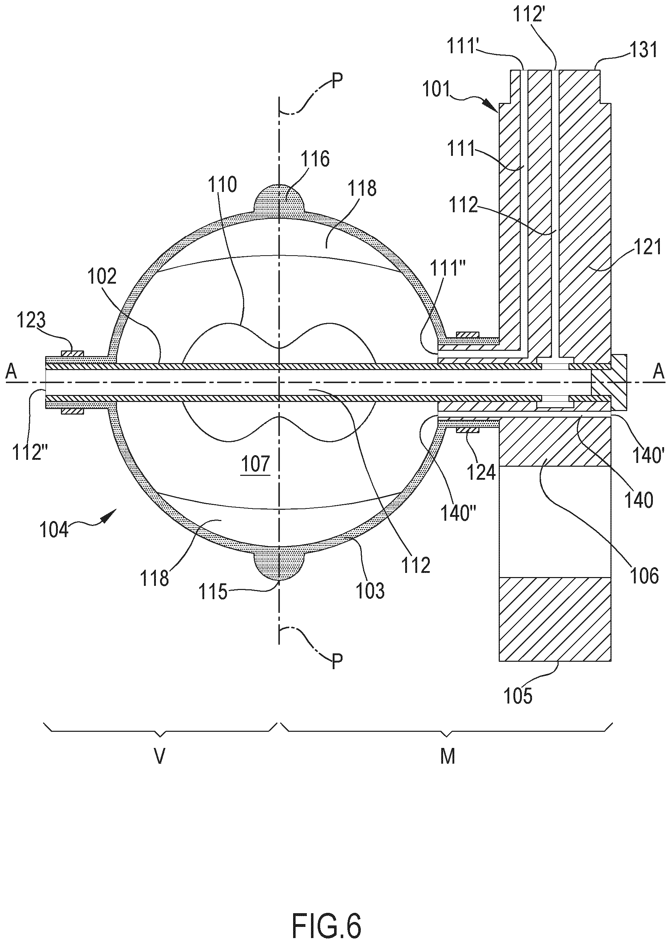

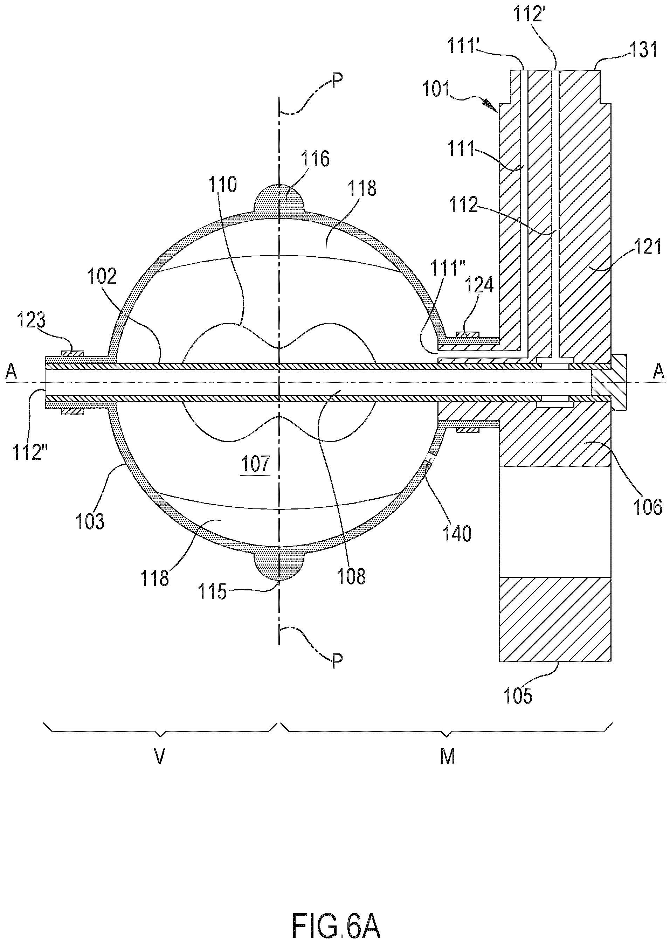

Fig. 5 and Figs. 6 and 6A show embodiments in which the supporting element 2 is a pipe, which has an axial hole 8, which forms a length of the second actuating duct 12.

Of course, the function of supporting the plug 3 and the function of second actuating duct can be performed not by a single element but by two separate elements, one with the supporting function only and the other with only the function of second actuating duct.

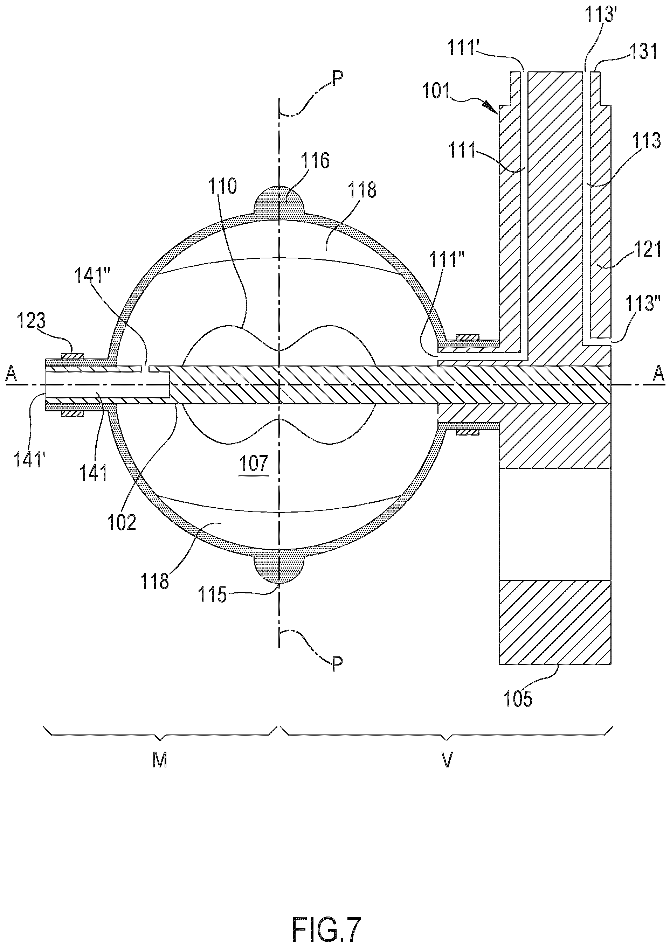

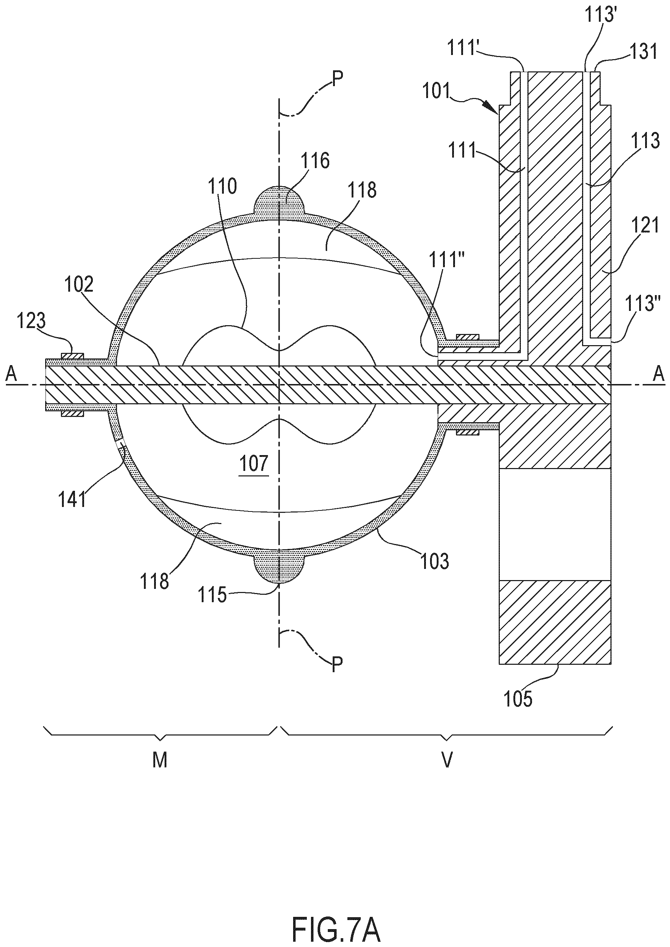

In the second embodiment shown by Figures 6, 6A, 7 and 7A, the hydraulic valve according to the invention is adapted to connect a two-way operating member.

In the first variation of the second embodiment, the valve comprises the first actuating duct 111, the second actuating duct 112 and a supplying duct 140. The supplying duct 140 connects the upstream side M to the inner volume 107 of the plug 103. It can be made in the central hub 106, for example, as shown in Fig. 6, or in the upstream portion M of the plug 103, as shown in Fig. 6A or inside the supporting element 102.

In the second variation of the second embodiment, the valve comprises the first actuating duct 111, the third actuating duct 113 and a supplying duct 141.

The supplying duct 141 connects the upstream side M to the inner volume 107 of the plug 3.

It can be made, for example, in the supporting element 102 which in this case is a bar, as shown in Fig. 7, or in the upstream portion M of the plug 103, as shown in Fig. 7A.

The valve according to the invention comprises, on the supporting element 2, 102, a bearing shaping 10, 110 adapted to promote an orderly contracted configuration of the plug 3, 103.

This bearing shaping 10, 110 allows the plug 3, 103 to contract in an orderly manner, bearing on top of said shaping, so as to assume a predefined and possibly hydrodynamic contracted shape. In the absence of such shaping, when the plug 3 is in contracted configuration, it would be more prone to move chaotically following local turbulence, and this would increase pressure drops and reduce plug life.

In addition, the hydraulic valve comprises elastic elements 18, 118 adapted to cause the plug 3, 103 to assume the dilated configuration of closing the valve under resting conditions, that is, when the pressure on the outer surface of the plug 3, 103 is equal to the pressure on the inner surface.

This allows the valve to be closed by a fluid captured from the upstream side M of the plug 3 and introduced into the inner volume 7.

These elastic elements 18 may comprise appropriate ribs, as in Fig. 5, made on the inner surface of the plug 3, or elastic elements of different types.

When the valve is inserted into a duct and the annular interposition element 1 is interposed and tightened between the flange of an upstream pipe 25 and the flange of a downstream pipe 26, or is interposed between the upstream pipe 25 and the downstream pipe 26 and connected thereto by any other coupling, such as a threaded one, the plug 3 and the supporting element 2 are inserted either into the downstream pipe or the upstream pipe (in Fig. 3, for example, they are inserted into the downstream pipe 26). It is also possible to consider embodiments, not depicted herein, in which the plug is partially inserted into both the downstream and upstream pipes. When the plug 3 dilates, thereby pressing against the inner walls of the pipe into which it is inserted, the fluid is prevented from flowing between upstream and downstream sides and the valve is closed. When the plug 3 contracts, the valve opens and the fluid can flow from the upstream to the downstream sides of the plug 3.

The maximum cross section 15 of the plug 3 separates an upstream side M from a downstream side V. When the valve is closed, the fluid, e.g., water intercepted by the valve, remains confined to the upstream side, while when the valve is open said water can pass from the upstream side to the downstream side, flowing around the deflated or contracted plug.

In Figures 3 and 4, the first embodiment of the valve according to the invention is mounted with the annular interposition element 1 arranged upstream of the plug 3.

However, as shown in Fig. 5, the first embodiment of the valve can be mounted either with the annular interposition element 1 upstream of the plug 3 or with the annular interposition element 1 downstream of the plug 3.

Therefore, assuming that the valve is mounted so that the annular interposition element 1 is on the upstream side M relative to the plug 3, as in Figs. 3 and 4 or as in one of the options in Fig. 5 in which the fluid flows from right to left, to close and open the valve, a three-way operating member 30 is connected to the first ends 11', 12', 13' of the actuating ducts 11, 12, and 13 and allows the three ends of the actuating ducts to be selectively connected and thus to connect the upstream side M to the inner volume 7 of the plug 3, by joining the first ends 11' and 13' of the first and third actuating ducts 11 and 13 (Fig. 5), or else the downstream side V to the inner volume 7 of the plug 3, by joining the first ends 11' and 12' of the first and second actuating ducts 11 and 12, or even the inner volume 7 to the outside, by opening the first actuating duct 11 to the outside.

By placing the first actuating duct 11 in communication with the second actuating duct 12 or by opening the first actuating duct 11 to the outside, the fluid in the inner volume 7 of the plug 3 is discharged downstream or to the outside, the plug 3 is compressed by the pressure of the fluid outside it and contracts while bearing on the bearing shaping 10.

In such a contracted configuration, the cross section of the pipe at the plug 3 is largely clear, the plug allows the fluid to flow from the upstream pipe to the downstream pipe and the valve is then open.

To close the valve, the operating member 30 connects the third actuating duct 13 to the first actuating duct 11, so that the incoming fluid from the upstream side is partially conveyed into the inner volume 7 of the plug 3, which begins to swell.

Due to the presence of the inner ribs or elastic elements 18, whilst introducing into the inner volume 7 of the plug 3 a fluid having the same pressure as the fluid outside the plug, the plug 3 switches from a contracted configuration to a fully dilated configuration in which the annular bulge 16 presses against the inner surface of the downstream pipe 26, thus blocking the flow through the valve. The valve with the dilated plug is then in a closed position.

The fluid is confined on the upstream side M of the plug 8 and the pressure created downstream is significantly lower than the upstream pressure.

The valve can be opened again when the operating member 30 connects the first and second actuating ducts 11, 12 to each other to allow the fluid in the inner volume 7 of the plug 3 to flow downstream CREDO CI SIA UN ERRORE NEL TESTO ITALIANO (PAG.21) dovrebbe essere "a valle dell'otturatore 3" non "a valle e all'otturatore 3"and to the plug 3, or when the operating member 30 opens the first actuating duct 11 to the outside, thus allowing the fluid in the inner volume 7 of the plug 3 to flow outside.

In both cases, the fluid flowing out of the inner volume 7 of the plug 3 causes the plug 3 to contract under the pressure of the outer fluid, and the valve opens.

In contracted configuration, the plug is pressed by the pressure of the outer fluid against the bearing shaping 10, so that its orderly contraction is promoted.

In the case where the annular interposition element 1 is on the downstream side V, and thus the fluid meets the plug 8 first (case where the fluid moves from left to right in Fig. 5), the valve closes when the first and second actuating ducts 11 and 12 are connected, thus causing the fluid to flow from the upstream side into the inner volume 7.

The valve opens when the first actuating duct 11 is connected to the third actuating duct 13 or the outside, thus allowing the fluid in the inner volume 7 of the plug 3 to flow downstream or outside.

A second embodiment of the servo-actuated valve according to the invention is intended for the connection of a two-way operating member.

Figures 6 and 6A depict a first variation of said second embodiment, in which the valve is adapted to be arranged in a conduit with the annular interposition element 101 located upstream of the plug 103.

Figures 7 and 7A depict a second variation of the second embodiment, in which the valve is adapted to be arranged in a conduit with the annular interposition element 101 located downstream of the plug 103.

In these figures, the numbers of corresponding elements have been increased by 100 compared to the previous figures.

The second embodiment comprises a supplying duct 140 or 141 arranged on the upstream side and adapted to connect the inner volume 107 of the plug 103 to the fluid located on the upstream side.

The second embodiment of the servo-actuated hydraulic valve comprises a first actuating duct 111, with a first end 111' on the outer side surface 105 of the annular interposition element 101, and a second end 111' at the inner volume 107 of said plug 103.

Said first actuating duct 111 places the inner volume 107 of the plug 103 in communication with the outside.

The first actuating duct 111 has a passage cross-section larger than the supplying duct 140, so that it is adapted to allow higher flow rate of fluid to flow, all other conditions being equal.

Referring to Figs. 6 and 6A, it can be seen that the valve according to the first variation of the second embodiment also comprises a second actuating duct 112 which crosses the ideal plane P while passing from upstream to downstream side. It comprises a first end 112' on the outer side surface 105 of the annular interposition element 101, which is located on the upstream side M, and a second end 112' which is located on the inner surface 104 and on the downstream side V of the valve.

The passage cross-section of said second actuating duct 112 is generally equal to that of the first actuating duct 111 and larger than that of the supplying duct 140.

Fig. 6 shows the case in which the supplying duct 140 is made in the central hub 106 of the annular interposition element 101 and the second actuating duct is partially made in the supporting element 102.

Fig. 6A shows the case in which the supplying duct 140 is made in the upstream portion PM of the plug 103. In the case of Fig. 6A, the supplying duct 140 is a simple hole through the membrane of the plug 103.

With reference to the second variation shown in Figs. 7 and 7A, it can be seen that, unlike the previous case, the valve does not comprise said second actuating duct but instead a third actuating duct 113, which does not cross the ideal plane P. It comprises a first end 113' arranged on the outer side surface 105 and a second end 113'' arranged on the downstream side V of the valve and on its inner surface, that is, in a position adapted to come into contact with the fluid flowing in the conduit on which the valve is intended to be mounted.

As in the first embodiment, the plug 103 comprises an annular bulge 116 that improves sealing when the valve is closed and physically delimits the upstream side M from the downstream side V.

Figs. 7 and 7A show that the valve also comprises a supplying duct 141' that has, at least in one length, a passage cross section smaller than the passage cross section of the first and third actuating ducts 111 and 113, such as, for example, at the second end 141'' in Fig. 7.

The supplying duct 141 is adapted to connect the inner volume 107 of the plug 103 to the fluid that is on the upstream side M of the valve.

In Fig. 7 the supplying duct 141 is arranged inside the supporting element 102 and comes out laterally therefrom, so that its second end 141'' is located in the inner volume 107.

In the case where, as in Fig. 7A, the supplying duct 141 is a hole through the membrane of the plug 3, the supporting element 102 may comprise an entirely solid bar, although a hollow pipe allows greater overall lightness of the valve to be achieved.

In order to illustrate the operation of the first variation of the second embodiment, as done above, it should be assumed that the annular interposition element 101 of the valve according to the invention is, in the operating position, interposed and tightened between the two ends of an upstream pipe and a downstream pipe.

As for the first variation of the second embodiment (Figs. 6 and 6A), the plug 103 is arranged downstream of the annular interposition element 101 and inserted into the downstream pipe.

The supplying duct 140 places the fluid on the upstream side M in connection with the inner volume 107 of the plug 103.

The supplying duct 140 is always open, so that a small flow rate of fluid constantly flows in the inner volume 107 of the plug 103, tending to cause it to dilate.

If the first actuating duct 111 is closed by the operating member, the plug 103 dilates, being gradually filled by fluid coming from the upstream side M through the supplying duct 140, and the valve closes.

When the valve is closed, the annular bulge 116 presses against the inner surface of the downstream pipe.

When the operating member connects the first actuating duct 111 to the second actuating duct 112, because of the larger cross section of these two ducts compared with the supplying duct 140, the flow rate of the fluid flowing out of the inner volume 107 is greater than that flowing in through the supplying duct 140, so that the fluid in the inner volume 107 is discharged downstream, the inner volume 107 is almost completely emptied, the plug 103 contracts and the valve opens.

The valve according to the second variation of the second embodiment (Figs. 7 and 7A) is adapted to be arranged between the ends of two pipes, so that the annular interposition element 101 is on the downstream side V with respect to the plug 103 and said plug 103 is then inserted into the upstream pipe, when the valve is arranged on the conduit in which the fluid to be intercepted flows.

In order to illustrate the operation of the second variation of the second embodiment, as done above, it should be assumed that the annular interposition element 101 of the valve according to the invention is, in the operating position, interposed and tightened between the two ends of an upstream pipe and a downstream pipe.

The supplying duct 141 places the fluid on the upstream side M in connection with the inner volume 107 of the plug 103.

The supplying duct 141 remains always open, so that a small flow rate of fluid constantly flows in the inner volume 107 of the plug 103, thus tending to cause the plug 103 to dilate.

If the first actuating duct 111 is closed by the operating member, the plug 103 dilates as it is gradually filled with fluid, the annular bulge 116 presses against the inner surface of the upstream pipe and the valve closes.

When the operating member connects the first actuating duct 111 to the third actuating duct 113 or outside, because of the larger cross section of these two ducts compared with the supplying duct 141, the flow rate of the fluid flowing out of the inner volume 107 is greater than that flowing in through the supplying duct 141, so that the fluid in the inner volume 107 is discharged downstream or outside, the inner volume 107 is almost completely emptied, the plug 103 contracts under the pressure of the outer fluid and the valve opens.

The valve may comprise a two-way operating member arranged on the outer side surface 105 of the annular interposition element 101, said operating member being connected to the first ends of the first and second or the first and third actuating ducts.

The inventive idea common to all the embodiments described is the elimination of the valve body, which is present in today's servo-operated valves.

To close the valve according to the invention, the plug presses against the inner walls of the pipe into which it is inserted, whether it is an upstream pipe or a downstream pipe, rather than against the surface of the valve body.

The valve according to the invention comprises an annular interposition element, which is interposed and tightened between the preferably flanged or threaded ends of two pipes, an upstream pipe and a downstream pipe, that make up the conduit on which the valve is to be inserted.

The supporting element supports the plug and, if hollow, the hole inside it can be a part of the second actuating duct, which runs from the upstream side M to the downstream side V, crossing the plug and the ideal plane P.IN ITALIANO C'E**'** un errore (Pag. 30): "paino" invece di "piano"

The absence of the valve body allows a very considerable reduction in weight compared with today's servo-actuated valves for the same nominal diameter, as well as a significant reduction in cost. This allows easier installation by a single operator, even in many cases where at least two operators would be required to mount a traditional valve.

The absence of a valve body causes a reduction in the overall dimensions when the valve is inserted into an existing conduit, as the additional size in the longitudinal direction is only equal to the thickness of the annular interposition element.

In addition, when the valve is open, the fluid follows a less tortuous path than in other valves, and this results in lower pressure drop, which is a very important parameter in assessing valuable characteristics of a valve.

The reduced tortuosity of the path followed by the fluid when the valve is open also reduces cavitation, which increases valve life.

In some embodiments, the valve may also comprise a two-way or three-way operating member.

In all the different embodiments, the valve according to the invention may also comprise the upstream 25 or downstream 26 pipe intended to accommodate the plug 3 therein, said upstream 25 or downstream 26 pipe having a longitudinal length equal to or slightly greater than the length of the plug 3 in the longitudinal direction, so as to completely contain it and, at the same time, have small dimensions, so as not to be bulky.

Said upstream 25 or downstream 26 pipe is a tubular element adapted to be connected to the annular interposition element 1, the usefulness of which is to allow the valve to be inserted or removed more easily during installation or maintenance operations, in cases where the ends of the conduit into which the valve is to be inserted cannot be easily spaced apart or brought closer together. Compared with existing inflatable plugs or stoppers, which cannot be considered valves, let alone servo-actuated valves, the servo-actuated valve according to the invention has notable differences, the most remarkable of which are that:
1) it does not involve high pressure inflation, such as by compressed air, but uses the same fluid flowing in the pipeline to close the valve, so that the pressure of the fluid inside the plug is equal to the pressure of the fluid flowing outside;
2) it comprises an annular interposition element similar to a flange, which is adapted to be interposed and tightened at the ends of two pipes between which the valve is interposed;
3) it comprises a supporting element of the plug connected to the annular interposition element;
4) it comprises multiple actuating ducts to allow the valve to be servo-actuated by a two-way or three-way operating member;
5) it comprises, on the outer surface of the annular interposition element, devices for connecting the operating member to the actuating ducts;
6) in the second embodiment it comprises a supplying duct passing through the thickness of the plug;
**7)** it comprises a plug appropriately perforated so as to be able to be arranged and tightened on the supporting element.

## Claims

1. Servo-actuated hydraulic valve adapted to be interposed between an upstream pipe (25) and a downstream pipe (26) of a conduit in which a fluid to be intercepted flows in the longitudinal direction, said valve comprising an annular interposition element (1) and a plug (3) which is constrained to said annular interposition element (1), said plug (3) comprising an inner volume (7) and being adapted to change its volume between a dilated configuration and a contracted configuration, said annular interposition element (1) being adapted to be interposed transversely and tightened between said upstream pipe (25) and said downstream pipe (26) of said conduit, so that said plug (3) is introduced at least partially into at least one of said upstream pipe (25) and said downstream pipe (26).

2. Valve according to the preceding claim, **characterised in that** said annular interposition element (1) has an outer side surface (5) which is adapted to remain accessible from the outside of the assembly comprising said upstream pipe (25), said downstream pipe (26) and said annular interposition element (1) which is interposed therebetween, said valve further comprising a first actuating duct (11) having a first end (11') on the outer side surface (5) and a second end (11'') in the inner volume (7) of the plug (3), said first actuating duct (11) being adapted to place the inner volume (7) of the plug (3) in communication with the outside.

3. Valve according to the preceding claim, **characterised by** comprising an inner surface (4) which is adapted to come into contact with said fluid to be intercepted when the valve is operationally inserted into the conduit, between the upstream pipe (25) and the downstream pipe (26), when in dilated configuration said plug (3) having a maximum cross-section (15) which separates an upstream portion (PM) of the plug (3) from a downstream portion (PV) of the same plug (3) and separates, outside the plug (3), an upstream side (M) from a downstream side (V) of the valve according to the invention, said valve further comprising at least one of:
- a second actuating duct (12) which has a first end (12') arranged on the outer side surface (5) of the annular interposition element (1) and a second end (12") arranged on the inner surface (4) of the valve and on the downstream (V) or upstream (M) side opposite the downstream (V) or upstream (M) side on which the annular interposition element (1) is located;
- a third actuating duct (13) which has a first end (13') on the outer side surface (5) of the annular interposition element (1) and a second end (13") arranged on the inner surface (4) of the valve and on the same downstream (V) or upstream (M) side on which the annular interposition element (1) is located.

4. Valve according to one or more of the preceding claims, **characterised in that** said annular interposition element (1) comprises a central hub (6) and one or more spokes (21) adapted to connect said central hub (6) to the inner surface (4) of the annular interposition element (1), said valve further comprises a supporting element (2) of the plug (3), connected to said central hub (6).

5. Valve according to the preceding claim, **characterised in that** said supporting element (2) crosses the plug (3) from the upstream portion (PM) to the downstream portion (PV).

6. Valve according to one or both claims 4 to 5, **characterised in that** said supporting element (2) comprises a rod or a pipe, said pipe having an axial hole (8) which constitutes a length of the second actuating duct (12).

7. Valve according to one or more of claims 3 to 6, **characterised by** comprising both said second actuating duct (12) and said third actuating duct (13).

8. Valve according to one or more of claims 3 to 6, **characterised by** comprising only one of the second and third actuating ducts (112, 113) and by comprising a supplying duct (140, 141) which connects the upstream side (M) with the inner volume (7) of the plug (3).

9. Valve according to the preceding claim, **characterised by** comprising the first actuating duct (111), the second actuating duct (112) and a supplying duct (140) arranged in the central hub (106) or on the upstream portion (PM) of the plug (103) or inside the supporting element (102).

10. Valve according to claim 8, **characterised by** comprising the first actuating duct (111), the third actuating duct (113) and a supplying duct (141) arranged either inside the supporting element (102) or on the upstream portion (PM) of the plug (103).

11. Valve according to one or more of the preceding claims, **characterised in that** said plug (3) has substantially the shape of a sphere or of an ellipsoid or of a cylinder closed at the bases by two half spheres, or of a doughnut.

12. Valve according to one or more of the preceding claims, **characterised in that** said plug (3; 103) comprises an annular bulge (16; 116) at its maximum cross-section (15; 115).

13. Valve according to one or more of the preceding claims, **characterised by** comprising a bearing shaping (10; 110) for said plug (3; 103), which is adapted to promote an orderly contracted configuration of the plug (3; 103).

14. Valve according to one or more of the preceding claims, **characterised by** comprising elastic elements (18; 118) adapted to cause the plug (3; 103), when at rest, to assume the dilated closing configuration.

15. Valve according to one or more of the preceding claims, **characterised by** comprising the upstream pipe (25) or the downstream pipe (26) intended to accommodate the plug (3) therein.
